Europäisches Patentamt

European Patent Office

Office européen des brevets

(11) Veröffentlichungsnummer : **0 063 801**
**B1**

# EUROPÄISCHE PATENTSCHRIFT

(45) Veröffentlichungstag der Patentschrift :
21.11.85

(21) Anmeldenummer : 82103451.9

(22) Anmeldetag : 23.04.82

(51) Int. Cl.⁴ : **B 65 H 29/32, B 31 B 1/92, B 65 G 57/04, B 65 H 29/24**

(54) Vorrichtung zum Stapeln flacher Gegenstände.

(30) Priorität : 24.04.81 DE 3116400
13.05.81 DE 3119004

(43) Veröffentlichungstag der Anmeldung :
03.11.82 Patentblatt 82/44

(45) Bekanntmachung des Hinweises auf die Patenterteilung : 21.11.85 Patentblatt 85/47

(84) Benannte Vertragsstaaten :
BE FR GB IT

(56) Entgegenhaltungen :
DE-A- 1 436 511
DE-A- 2 332 925
DE-A- 2 717 754
DE-A- 2 807 276
DE-B- 1 067 675
DE-B- 1 215 175
US-A- 3 092 381
US-A- 3 446 103
US-A- 3 904 046

(73) Patentinhaber : Windmöller & Hölscher
Münsterstrasse 48-52
D-4540 Lengerich i.W. (DE)

(72) Erfinder : Mundus, Friedhelm
In den Rietbroken 22
D-4540 Lengerich (DE)
Erfinder : Achelpohl, Fritz
Banningstrasse 3
D-4540 Lengerich (DE)

(74) Vertreter : Lorenz, Eduard et al
Rechtsanwälte Eduard Lorenz - Bernhard Seidler
Margrit Seidler - Dipl.-Ing. Hans-K. Gossel Dr. Ina
Philipps - Dipl.-Chem. Rainer Wulf Widenmayerstrasse 23
D-8000 München 22 (DE)

## Beschreibung

Die Erfindung betrifft eine Vorrichtung zum Stapeln flacher Gegenstände nach dem Oberbegriff des Patentanspruchs 1.

Beispielsweise bei der Herstellung von Beuteln aus Hochdruck- oder Niederdruck-Polyäthylen besteht aufgrund ihrer Leichtigkeit und ihres knitternden und zur statischen Aufladung neigenden Materials die Schwierigkeit, diese in geordneter Form aufeinander abzulegen, so daß sich verkaufsfähige, leicht zu handhabende Stapel ergeben. Derartige Beutel lassen sich praktisch nur dann in geordneter Form aufeinander ablegen, wenn sie von ihrem Ausstoß aus der Maschine bis zu ihrer Ablage in gestraffter Form gehalten und transportiert werden.

Bei einer aus US-A-34 46 103 bekannten Vorrichtung der eingangs angegebenen Art sind die Arme als Schläger ausgebildet, die beim Umlauf über das kopfseitige Ende des mit diesen verbundenen Ablageförderers um 180° umschwenken und die Werkstücke gleichsam auf die Ablage bzw. den sich bildenden Stapel aufschlagen. Die Schaffung kantengerader Stapel ist mit der bekannten Vorrichtung jedoch schwierig, weil die einzelnen Werkstücke sowohl durch ihr Aufschlagen auf die Ablage bzw. den sich bildenden Stapel als auch beim anschließenden Abziehen der Arme von dem Stapel verrutschen können.

Aufgabe der Erfindung ist es, eine Vorrichtung nach dem Oberbegriff des Patentanspruchs 1 zu schaffen, mit der sich die Gegenstände aus lappigem, leichtem oder knitterndem Material stapeln lassen, ohne deren Verrutschen auf dem Stapel befürchten zu müssen.

Erfindungsgemäß wird diese Aufgabe durch die kennzeichnenden Merkmale des Patentanspruchs 1 gelöst.

In der erfindungsgemäßen Vorrichtung übernehmen die Saugarme die abzulegenden Gegenstände oder Beutel, bremsen diese ab und geben diese erst durch Unterbrechung der Saugluft frei, wenn sie diese aus der horizontalen Förderbewegung in die vertikale Ablegebewegung umgelenkt haben. Die Saugarme fahren schnell unter den herabfallenden Gegenständen oder Beuteln weg, so daß diese die verbleibende Fallstrecke ohne Störungen und ohne daß ein Überschlagen zu befürchten wäre, zu überwinden vermögen. Die erfindungsgemäße Vorrichtung ermöglicht somit eine straffe Halterung der Gegenstände bis kurz vor ihrer Ablage.

Eine Vorrichtung zum Stapeln flacher Gegenstände mit die Gegenstände bis zu ihrer Ablage haltenden Saugarmen ist an sich aus der DE-OS-23 32 925 bekannt. Die sternförmig angeordneten und um eine horizontale Achse rotierenden Saugarme vermögen die mit einem perforierten Rand versehenen Gegenstände aber nur in hängender Form auf seitlich angeordnete Nadelreihen aufzunadeln.

Zweckmäßigerweise sind die Saugarme an senkrechten Trägern befestigt, die an endlosen Riemen oder Ketten angelenkt sind, die unterhalb des Doppelbandförderers höhenversetzt parallel zueinander mit gleicher Geschwindigkeit umlaufen. Die Träger sind kurbelartig mit den beiden endlosen Fördermitteln verbunden, so daß sie während ihres Umlaufs die an diesen befestigten Saugarme parallel zu sich selbst führen.

Im Endbereich vor der vorderen Umlenkung einer der Riemen oder Ketten kann ein Saugkasten mit oberen, offenem Spalt angeordnet sein, der von dem Riemen oder einem mitlaufenden Band abgedeckt ist, die im Bereich des Trägers mit einer Öffnung oder einem in eine Bohrung des Trägers mündenden Kanal versehen sind, durch die die Saugluftzufuhr zu den Saugarmen erfolgt. Der Spalt des Saugkanals wird also durch den über diesen laufenden Riemen abgedeckt, so daß nur die im Bereich des Trägers vorgesehene Öffnung mit Saugluft versorgt wird.

Zweckmäßigerweise endet der um die hintere Umlenkrolle des Riemens oder der Kette in vertikaler Richtung herumgeführte Saugkasten dicht hinter dieser. Dadurch ist sichergestellt, daß die Saugluftzufuhr zu den Saugarmen unterbrochen wird, sobald die Saugarme aus ihrer Bewegung in Förderrichtung in eine vertikale Bewegung überführt worden sind.

In weiterer Ausgestaltung der Erfindung ist vorgesehen, daß der Träger an mit gleicher Drehzahl rotierenden Scheiben gelagert ist, deren Achsen zur Parallelführung des Trägers zueinander versetzt sind. Die Scheiben können in beliebiger Weise zueinander versetzt angeordnet sein, wobei lediglich ein Verbindungsträger vorgesehen werden muß, auf den der die Saugarme tragende Träger senkrecht befestigt ist, wenn die Scheibenachsen nicht in einer vertikalen Ebene untereinander angeordnet sind. Die Scheiben sind mit einer Drehzuführung für die Saugluft versehen.

Zweckmäßigerweise ist die Ablage mit einer vorderen, mit senkrechten Schlitzen versehenen Wand versehen, durch die die Saugarme bei ihrem Umlauf greifen. Die Wand gibt den sanft herabfallenden Gegenständen eine zusätzliche Führung, wodurch die Bildung kantengerader Stapel begünstigt wird.

Nach einer anderen Ausgestaltung der Erfindung ist vorgesehen, daß die Saugarme so kurz ausgebildet sind, daß sie nur den hinteren Bereich der Ablage überfahren, und daß mindestens zwei Oberbänder des Doppelbandförderers mit bis dicht vor das vordere Ende der Ablage reichenden Saugkästen und im Abstand der Werkstücke mit Sauglöchern oder Sauglochgruppen versehen sind, die die Werkstücke nur in deren vorderen Bereichen ansaugen. Diese Ausgestaltung dient vorzugsweise zur Ablage längerer Werkstücke oder Beutel. Die Sauglöcher der Oberbänder und der Saugarme geben oberhalb der Ablage die Werkstücke gleichzeitig frei, so daß diese auf die Ablage bzw. densich bildenden Stapel fallen können.

Die erfindungsgemäße Vorrichtung ermöglicht es, mehrere Förderlinien parallel zueinander anzuordnen, hinter denen jeweils Stapelvorrichtungen vorgesehen sind, wobei die Saugarme aller Förderlinien an einem einzigen quer verlaufenden, Saugluft zuführenden Rohr befestigt sein können.

Wenn keine Unterbrechung in der taktweisen Zufuhr der zu stapelnden Gegenstände erfolgen soll, muß der Abtransport des Stapels während der Zeitspanne zwischen dem Ablegen zweier Gegenstände erfolgen, die jedoch so kurz ist, daß ein störungsfreies Herausfahren des fertigen Stapels aus der Stapelbildestation nicht gewährleistet ist. Um die Zufuhr der zu stapelnden Gegenstände nicht unterbrechen zu müssen, ist es daher erforderlich, eine Zwischenstapelung während der Zeit vorzusehen, in der der zuletzt gebildete Stapel abtransportiert wird. Um eine einen störungsfreien Abtransport der gebildeten Stapel ermöglichende Zwischenstapelung der Gegenstände zu schaffen, ist daher in weiterer Ausgestaltung der Erfindung vorgesehen, daß über den Stapel einschwenkbare, mit Saugluftöffnungen versehene Stützarme vorgesehen sind, auf die nach Bildung des Stapels die Ablage des ersten Gegenstands des folgenden Stapels erfolgt.

Nach dem Einschwenken der Stützarme über den abzutransportierenden Stapel werden deren Saugluftöffnungen an eine Saugluftquelle angeschlossen, so daß der erste auf diese abgelegte Gegenstand in seiner abgelegten Stellung fixiert ist. Nach dem Abtransport des letzten Stapels aus der Stapelbildestation fahren die Stützarme ruckartig unter den zwischenzeitlich abgelegten Gegenständen heraus, so daß diese auf das Stapelförderband in der Stapelbildestation fallen. Zweckmäßigerweise überragen die Stützarme den abzutransportierenden Stapel nur in einem Randbereich, so daß durch das Ausfahren der Stützarme nach Abschalten der Saugluft ein Verrutschen der zwischenzeitlich abgelegten Gegenstände nicht zu befürchten ist.

Zweckmäßigerweise sind zusätzlich Haltearme in zu den dem Ablegen dienenden Tragarmen versetzten vertikalen Ebenen auf den Stapel absenkbar, die mit dem Stapel aus der Stapelbildestation ausfahrbar und in ihre des Bewegungsbereichs der Tragarme befindliche Bereitschaftsstellung zurückführbar sind. Diese Haltearme drücken den fertigen Stapel während der ersten Phase seines Abtransports zusammen, so daß ein Verrutschen des Stapels während des Abtransports vermieden wird.

Zweckmäßigerweise sind die Stützarme in einer vertikalen, in der Abförderrichtung der Stapel liegenden Ebene über die in Abförderrichtung hintere Umlenkrolle des Stapelförderbandes in ihre oberhalb des Stapels befindliche Haltestellung schwenkbar.

In weiterer Ausgestaltung der Erfindung ist vorgesehen, daß die zur Abförderrichtung parallelen Haltearme in ihren hinteren Bereichen mit Aussparungen versehen sind, in die die Stützarme greifen. Die Ablage der nachfolgenden Gegenstände erfolgt sodann auf die Haltearme, wobei ein Verrutschen der nachfolgend abgelegten Gegenstände beim Ausfahren des letzten Stapels mit den Haltearmen dadurch verhindert wird, daß der unterste Gegenstand in seinem hinteren Bereich von den Saugluftdüsen der Stützarme angesaugt und festgehalten wird.

Zweckmäßigerweise sind die Stützarme durch die oberen Schenkel von schwenkbar gelagerten Bügeln gebildet.

Ausführungsbeispiele der Erfindung werden nachstehend anhand der Zeichnung näher erläutert. In dieser zeigt

Figur 1 eine Seitenansicht einer Stapelvorrichtung mit Saugarmablage und einer mit Haltestiften versehenen Ablagestation in schematischer Darstellung,

Figur 2 eine Seitenansicht der Saugarmführung mit Stapelkassette in schematischer Darstellung,

Figur 3 eine Draufsicht auf die Saugarmführung nach Fig. 2,

Figur 4 einen Längsschnitt durch den den Saugkasten abdeckenden Riemen im Bereich der vorderen Umlenkrolle mit der Lagerung des Saugarmträgers,

Figur 5 einen Schnitt durch die Lagerung des Saugarmträgers nach Fig. 4,

Figur 6 eine Seitenansicht einer abgewandelten Ausführungsform der Saugarmablagevorrichtung in schematischer Darstellung,

Figur 7 eine Seitenansicht einer anderen Ausführungsform der Stapelstation in schematischer Darstellung und

Figur 8 eine Draufsicht auf die Stapelstation nach Fig. 7.

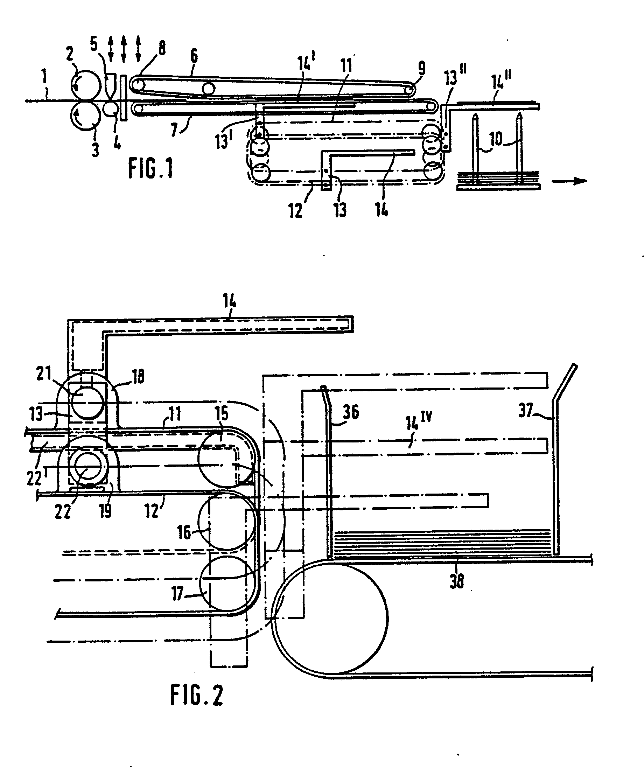

Bei der in Fig. 1 dargestellten Vorrichtung wird eine Schlauchfolienbahn 1 aus lappigem, leichtem thermoplastischen Kunststoff durch Vorzugswalzen 2, 3 vorgezogen und einer Querschweiß-Trennstation 4, 5 zugeführt, die in Förderrichtung hinter den Vorzugswalzen 2, 3 angeordnet ist. Die Querschweiß-Trennstation besteht aus einer auf- und abbewegbaren Trennnahtbacke 5 und einer dieser zugeordneten, aus einer Schweißwalze 4 bestehenden Gegenbacke.

Die von der Trennnahtbacke 5 abgetrennten einzelnen Werkstücke werden zwischen ein oberes Förderband 6 und ein unteres Förderband 7 eingeführt, wobei die hintere Umlenkrolle 8 des oberen Förderbands 6 als Tipperwalze ausgebildet ist, um eventuell an der Trennnahtbacke anhaftende Werkstücke von dieser abzuziehen.

Sowohl das obere als auch das untere Förderband 6, 7 bestehen jeweils aus mehreren, mit Abstand nebeneinander angeordneten einzelnen Bändern.

Hinter und unterhalb der vorderen Umlenkrolle 9 des unteren Förderbandes 7 des Doppelbandförderers ist die Stapelstation angeordnet, die bei dem Ausführungsbeispiel nach Fig. 1 aus einer Tischplatte besteht, an deren einen Seite zwei senkrechte Stifte 10 befestigt sind, auf die die an einem Rand mit Perforationen versehenen Beutel zu ihrer Stapelung aufgenadelt werden. Die Tischplatte kann zum Abtransport der fertigen Stapel an einer endlosen Kette oder dergleichen befestigt sein.

Unterhalb des Doppelbandförderers sind höhenversetzt parallel zueinander umlaufende Riemen 11, 12 vorgesehen, an denen jeweils senkrecht stehende Träger 13, 13', 13″ gelagert sind, die an ihren oberen Enden die in waagerechten Ebenen liegenden Saugarme 14, 14', 14″ tragen. Die Saugarme laufen im Endbereich des Doppelbandförderers zwischen den einzelnen Bändern des unteren Förderbandes 7 in der Förderebene und saugen die im Takt des Durchlaufs der Saugarme zugeführten Beutel an. Die Saugarme führen die Beutel in der aus Fig. 1 ersichtlichen Weise bis über das vordere Ende des Doppelbandförderers hinaus und nadeln diese während ihrer vertikalen Bewegung auf die Stifte 10 der Ablagestation auf. Nach dem Abschalten der Saugluftzufuhr fahren die Saugarme unter dem zuletzt zugeführten Beutel aus der Stapelstation heraus.

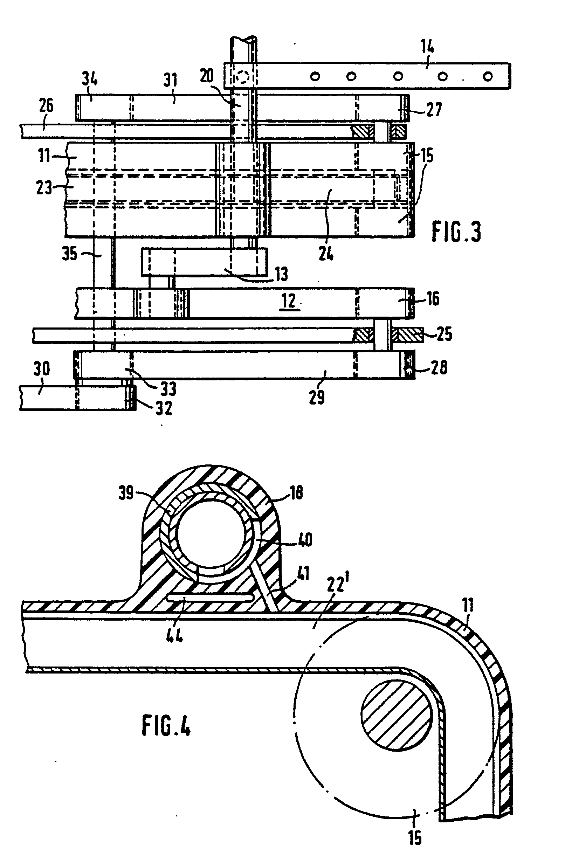

Die Führung der Saugarme 14, 14', 14″ ist aus den Fig. 2 und 3 näher ersichtlich. Der obere Riemen 11 läuft über die Rolle 15 und eine untere Rolle um, deren Achse mit der Achse der Rolle 16 des unteren Riemens 12 fluchtet. Der untere Riemen 12 läuft über die untere Umlenkrolle 17 zurück. Die Riemen 11, 12 sind mit Lagerwülsten 18, 19 zur Lagerung der Träger 13 versehen. Die Mittellinien der Lagerungen liegen in einer vertikalen Ebene, so daß die Träger 13 während ihres Umlaufs immer senkrecht stehen.

Die Träger 13 sind in der aus Fig. 3 ersichtlichen Weise mit einem Rohr 20 verbunden, auf das die waagerechten Saugarme 14 aufgesetzt sind.

Die Umlauflinien der Mittellinien der Lagerungen 21, 22 des Trägers 13 sind in Fig. 2 strichpunktiert eingezeichnet.

Der obere Riemen 11 deckt einen oberen Schlitz in dem Saugkasten 22 ab, der im Bereich der Umlenkrolle 15 nach unten abgewinkelt ist und etwa im Bereich der unteren Mantellinie der Rolle 15 endet. Der Riemen 11 ist beidseits an seiner Unterseite verzahnt und weist einen unverzahnten mittleren Bereich 23 auf, der in der aus Fig. 3 ersichtlichen Weise den Spalt 24 des Saugkastens 22 überdeckt.

Die Umlenkrollen 15, 16, 17 sind in der aus Fig. 3 ersichtlichen Weise in Gestellwänden 25, 26 gelagert. Auf den Wellen der Rollen sind auf den jeweils gegenüberliegenden Seiten der Gestellwände Antriebsrollen 27, 28 befestigt. Der Antrieb erfolgt über Riemen 29, 30, 31, die über Rollen 32, 33, 34 laufen. Die Welle 35 der Rollen 32, 33, 34 ist so tief angeordnet, daß die Träger 13 behinderungsfrei über diese hinwegfahren können.

Bei der aus Fig. 2 ersichtlichen Ausführungsform ist die Ablagestation kassettenförmig ausgebildet. Sie besteht aus einer hinteren, mit senkrechten Schlitzen versehenen Wandung 36 und einer vorderen Begrenzungswandung 37, die zum Abtransport der gebildeten Stapel hebbar ist. Weiterhin sind nicht dargestellte Seitenwände vorgesehen. Den Boden der Stapelstation bildet das Stapelförderband 38, das nach Anheben der vorderen Wandung 37 die Stapel im Takt ihrer Bildung abtransportiert.

In Fig. 2 sind die Saugarme 14 in verschiedenen Stellungen während ihres Durchlaufs durch die Stapelstation dargestellt. Die Saugluftzufuhr wird abgestellt, wenn die Saugarme 14 etwa ihre Stellung 14$^{IV}$ erreicht haben. Anschließend werden die Saugarme dadurch von den abzulegenden Gegenständen entfernt, daß diese beschleunigt nach unter fahren und aus der Kassette herausgezogen werden.

Aus Fig. 4 ist der Riemen 11, der den oberen Schlitz 24 des Saugkastens 22 überdeckt, näher ersichtlich. In die Wulst 18 ist eine Lagerhülse 39 einvulkanisiert, die mit einem über ihren Umfang verlaufenden Schlitz 40 versehen ist, in den der Kanal 41 mündet, der mit dem Saugkanal 22' in Verbindung steht. In der Lagerhülse 39 ist das Rohr 42 drehbar gelagert, das die Saugarme 14 trägt. Das Rohr 42 ist im Bereich des Schlitzes 49 mit einer Bohrung 43 versehen, so daß die Saugluftzufuhr zu dem Rohr 42 auch während der Drehung des Rohres relativ zu der Lagerhülse 39 aufrechterhalten ist.

Die Länge des Schlitzes 40 kann so bemessen sein, daß dieser gleichzeitig auch als Steuerschlitz für die Saugluftzufuhr dient.

Unterhalb der Wulst 18 ist der Riemen mit einem Durchbruch 44 versehen, der einen behinderungsfreien Lauf des Riemens über die Umlenkrollen gewährleistet.

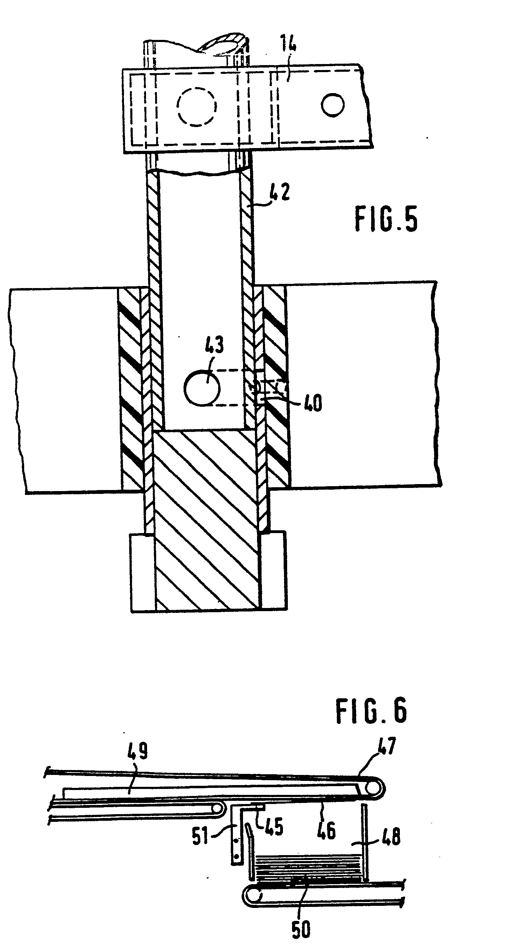

Bei der Ausführungsform nach Fig. 6 sind die Saugarme 45 nur so kurz ausgebildet, daß sie die Werkstücke 46 nur an ihren hinteren Enden ansaugen. Gleichzeitig ist das obere Förderband 47 des Doppelbandförderers bis über die Ablagestation 48 verlängert. Jeweils zwei seitliche Bänder des oberen Förderbandes 47 decken Saugkästen 49 ab. Die Bänder 47 sind im Abstand der zu stapelnden Beutel 46 mit Löchern versehen, durch die die Beutel 46 an ihren vorderen Enden angesaugt werden. Sobald der Beutel 46 seine aus Fig. 6 ersichtliche Stellung erreicht hat, wird die Saugluftzufuhr unterbrochen, so daß der Beutel 46 auf den Stapel 50 abfällt. Die Führung der Stütze 51 der Saugarme 45 entspricht der der zuvor beschriebenen Ausführungsbeispiele.

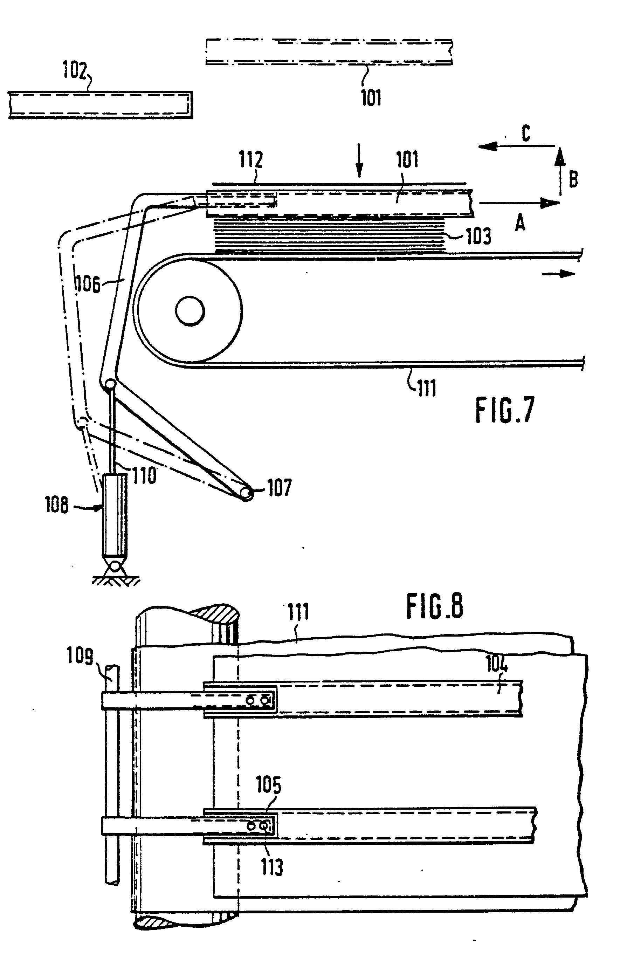

Bei der in den Fig. 7 und 8 dargestellten Ausführungsform werden die zu stapelnden Gegenstände 112 von den Tragarmen 102 in der Stapelbildestation abgelegt. Oberhalb des Bewegungsbereiches der Saug- oder Tragarme 102 befinden sich die aus einem Rechen 101 bestehenden Haltearme, die in nicht dargestellter Weise gelagert und mit Antriebseinrichtungen versehen sind.

Sobald nun von den Saugarmen 102 der letzte Beutel eines zu bildenden Stapels 103 abgelegt ist, senkt sich der Rechen 101 aus seiner oberen, mit gestrichelten Linien dargestellten Stellung in die untere, mit festen Linien dargestellte Lage und preßt dabei den Stapel 103 zusammen.

Wie die Fig. 8 zeigt, besteht der Rechen aus mehreren nebeneinander angeordneten Vierkantrohren 104, die in ihrem vorderen Bereich Aussparungen 105 aufweisen. In diese Aussparungen greifen mehrere die Stützarme bildende Finger 106 ein. Diese Finger 106 sind um eine gemeinsame Welle 107 mittels einer pneumatischen Kolbenzylindereinheit 108 aus der mit gestrichelten Linien dargestellten Lage in die in den Figuren mit voll ausgezogenen Linien dargestellte Lage verschwenkt. Zwecks Stabilisierung der einzelnen Finger 106 zueinander sind diese miteinander durch eine Achse 109 verbunden, an die auch die Kolbenstange 110 der pneumatischen Kolbenzylindereinheit 108 angreift. Aus der in Fig. 7 dargestellten Lage wird der fertige Stapel 103 durch Einschalten des Förderbandes 111 und durch Bewegung des Rechens 101 in Pfeilrichtung A aus dem Stapelbereich entfernt. Der zwischenzeitlich von den Saugarmen 102 herangeführte erste Beutel 112 des neu zu bildenden Stapels wird dabei von den in den Fingern 106 angeordneten Saugbohrungen 113 festgehalten. Ist der Rechen 101 genügend weit aus dem Stapelbereich herausgefahren, hebt sich der Rechen in Pfeilrichtung B an, um dann durch weitere Bewegung in Pfeilrichtung C in seine in Fig. 7 mit gestrichelten Linien dargestellte Lage zurückzukehren. Während der Bewegung des Rechens 101 in Pfeilrichtung B wird die Saugluft für die Finger 106 abgeschaltet und die Finger 106 über die pneumatische Kolbenzylindereinheit 108 in die mit gestrichelten Linien dargestellte Lage in Fig. 7 zurückgefahren.

Die Bildung eines weiteren Stapels erfolgt sodann in analoger Weise.

**Patentansprüche**

1. Vorrichtung zum Stapeln flacher Gegenstände, wie Schlauchabschnitte, Beutel oder dergleichen, vorzugsweise aus lappigem und/oder leichtem, knitterndem Material, mit einem aus mehreren im Abstand und parallel zueinander umlaufenden Bändern bestehenden Doppelbandförderer (6, 7) und einer unterhalb von dessen Abwurfende angeordneten Ablage (10, 38) und mit mindestens zwei mit Fördergeschwindigkeit im Endbereich des Doppelbandförderers (6, 7) in den Spalten zwischen je zwei Bändern von diesem umlaufenden und zueinander parallelen Armen (14, 14′, 14″), die über das vordere Ende des Doppelbandförderers (6, 7) laufen, diese so weit übergreifen, daß sie oberhalb der Ablage (10, 38) ihre Endstellung erreichen, und nach Absenken in eine zur Förderebene parallele Ebene zurückfahren, bis sie nach Umlenkung wieder in die Förderebene laufen, dadurch gekennzeichnet, daß die Arme als Saugarme (14, 14′, 14″) ausgebildet sind, die mit Saugluftanschlüssen versehen sind und deren mit Sauglöchern versehene Oberseiten im Bereich der Förderebene liegen, daß die Saugluft in den Saugarmen (14, 14′, 14″) derart gesteuert ist, daß die spätestens vor dem Austritt der Saugarme aus den Spalten zwischen Bändern eingeschaltete Saugluftzufuhr nach oder bei der Absenkbewegung der Arme (14, 14′, 14″) über der Ablage (10, 38) vor der Rückzugsbewegung wieder unterbrochen wird und daß die Saugarme (14, 14′, 14″) derart angelenkt sind, daß sie während ihres Umlaufs immer parallel zur Förderebene stehen.

2. Vorrichtung nach Anspruch 1, dadurch gekennzeichnet, daß die Saugarme (14) an senkrechten Trägern (13) befestigt sind, die an endlosen Riemen (11, 12) oder Ketten angelenkt sind, die unterhalb des Doppelbandförderers (6, 7) höhenversetzt parallel zueinander mit gleicher Geschwindigkeit umlaufen.

3. Vorrichtung nach Anspruch 2, dadurch gekennzeichnet, daß im Endbereich vor der vorderen Umlenkung eines der Riemen (11) oder einer der Ketten ein Saugkasten (22′) mit oberem, offenem Spalt (24) angeordnet ist, der von dem Riemen (11) oder einem mitlaufenden Band abgedeckt ist, die im Bereich des Trägers (13) mit einer Öffnung oder einem in eine Bohrung des Trägers mündenden Kanal (41) versehen sind, durch die die Saugluftzufuhr zu den Saugarmen (14) erfolgt.

4. Vorrichtung nach einem der Ansprüche 2 oder 3, dadurch gekennzeichnet, daß die Lagerungen der Träger (13) in die aus elastomerem Material bestehenden Riemen oder Zahnriemen einvulkanisiert oder eingespritzt sind.

5. Vorrichtung nach einem der Ansprüche 2 bis 4, dadurch gekennzeichnet, daß der um die hinteren Umlenkrollen des Riemens (11) oder der Kette herumgeführte Saugkasten (22′) dicht hinter diesen endet.

6. Vorrichtung nach Anspruch 2, dadurch gekennzeichnet, daß die Träger an mit gleicher Drehzahl rotierenden Scheiben gelagert sind, deren Achsen zur Parallelführung der Saugarme zueinander versetzt sind.

7. Vorrichtung nach einem der Ansprüche 1 bis 6, dadurch gekennzeichnet, daß die Ablage eine vordere, mit senkrechten Schlitzen versehene Wand (36) aufweist, durch die die Saugarme (14) bei ihrem Umlauf greifen.

8. Vorrichtung nach einem der Ansprüche 1 bis 7, dadurch gekennzeichnet, daß die Ablage eine hintere heb- oder schwenkbare Begrenzungswand (37) aufweist.

9. Vorrichtung nach einem der Ansprüche 1 bis 8, dadurch gekennzeichnet, daß die Saugarme (45) so kurz ausgebildet sind, daß sie nur den hinteren Bereich der Ablage überfahren, und daß mindestens zwei Oberbänder des Doppelbandförderers mit bis dicht vor das vordere Ende der Ablage reichenden Saugkästen (49) und im Abstand der Werkstücke mit Sauglöchern oder Sauglochgruppen versehen sind, die die Werkstücke nur an deren vorderen Bereichen ansaugen.

10. Vorrichtung nach einem der Ansprüche 1 bis 9, dadurch gekennzeichnet, daß die Ablage seitlich mit senkrecht stehenden Stiften (10) versehen ist.

11. Vorrichtung nach einem der Ansprüche 1 bis 10, dadurch gekennzeichnet, daß mehrere Förderlinien für die zu stapelnden Gegenstände parallel zueinander angeordnet sind, deren Saugarme an jeweils einem querverlaufenden, Saugluft führenden Rohr befestigt sind.

12. Vorrichtung nach Anspruch 1, dadurch gekennzeichnet, daß über den Stapel (103) einschwenkbare, mit Saugluftöffnungen (113) versehene Stützarme (106) vorgesehen sind, auf die nach Bildung des Stapels (103) die Ablage des ersten Gegenstandes (112) des folgenden Stapels erfolgt.

13. Vorrichtung nach Anspruch 12, dadurch gekennzeichnet, daß die Stützarme (103) fingerartig ausgebildet sind und den abzutransportierenden Stapel (103) nur in einem Randbereich übergreifen.

14. Vorrichtung nach Anspruch 12 oder 13, dadurch gekennzeichnet, daß in zu den dem Ablegen dienenden Tragarmen (102) versetzten vertikalen Ebenen Haltearme (101) auf den Stapel (103) absenkbar sind, die mit dem Stapel (103) aus der Stapelbildestation ausfahrbar und in ihre oberhalb des Bewegungsbereichs der Tragarme (102) befindliche Bereitschaftsstellung zurückführbar sind.

15. Vorrichtung nach einem der Ansprüche 12 bis 14, dadurch gekennzeichnet, daß die Stützarme (106) in einer vertikalen, in der Abförderrichtung der Stapel liegenden Ebene über die in Abförderrichtung hintere Umlenkrolle des Stapelförderbandes (111) in ihre oberhalb des Stapels (103) befindliche Haltestellung schwenkbar sind.

16. Vorrichtung nach einem der Ansprüche 12 bis 15, dadurch gekennzeichnet, daß die zur Abförderrichtung parallelen Haltearme (101) in ihrem hinteren Bereich mit Aussparungen (105) versehen sind, in die die fingerartigen Stützarme (106) greifen.

17. Vorrichtung nach einem der Ansprüche 12 bis 16, dadurch gekennzeichnet, daß die Stützarme (106) durch die oberen Schenkel von Schwenkbar gelagerten Bügeln gebildet sind.

18. Vorrichtung nach einem der Ansprüche 12 bis 17, dadurch gekennzeichnet, daß zum Verschwenken der Stützarme (106) Druckmittel-Kolben-Zylinder-Einheiten (108) vorgesehen sind.

**Claims**

1. Apparatus for stacking flat articles, such as flexible tubular sections, bags or the like, preferably made of limp and/or light-weight material which tends to wrinkle, comprising a double belt conveyor (6, 7), which consists of plurality of spaced apart belts, which revolve parallel to each other, a receiving support (10, 38), which is disposed below the discharge end of the conveyor, and in each of the gaps between adjacent belts of said conveyor at least two parallel arms (14, 14′, 14″), which are parallel to each other and revolve at the conveying speed in the end portion of the double belt conveyor (6, 7) and move over the forward end of the double belt conveyor (6, 7) and extend over said forward end to such an extent that they reach their end position above the receiving support (10, 38) and when they have been lowered return to a plane that is parallel to the plane of conveyance and are then reversed and move again into the plane of conveyance, characterized in that the arms consist of suction arms (14, 14′, 14″), which are provided with airsucking ports and have top portions provided with suction openings and disposed adjacent to the plane of conveyance, the sucked air flowing in the suction arms (14, 14′, 14″) is so controlled that the sucking of air, which is initiated, at the latest, before the suction arms leave the gaps between belts, is interrupted after or during the descent of the arms (14, 14′, 14″) over the receiving support (10, 38) before their return movement, and the suction arms (14, 14′, 14″) over the receiving support (10, 38) before their return movement, and the suction arms (14, 14′, 14″) are pivoted in such a manner that they are always parallel to the plane of conveyance during their revolution.

2. Apparatus according to claim 1, characterized in that the suction arms (14) are secured to vertical carriers (13), which are pivoted to endless belts (11, 12) or chains, which extend below the double belt conveyor (6, 7) and are parallel to themselves and vertically spaced apart and revolve at the same velocity.

3. Apparatus according to claim 2, characterized in that a suction box (22′) having at its top an open gap (24) is provided in the end region before the forward reversing means for one the belts (11) or one of the chains and is covered by the belt (11) or by a core-volving belt, which are provided adjacent to the carrier (13) with an opening or with a passage (41), which opens into a bore of the carrier, and air is sucked from the suction arms (14) through said opening or passage.

4. Apparatus according to claim 2 or 3, characterized in that the bearing means associated with the carriers (13) are embedded in the belts or cogged belts consisting of elastomeric material which has been vulcanized or injection-moulded.

5. Apparatus according to any of claims 2 to 4, characterized in that the suction box (22′) extends around the rear reversing pulleys for the belt (11) or the chain and terminates closely behind the same.

6. Apparatus according to claim 2, characterized in that the carriers are movably mounted on discs, which are offset from each other so that the suction arms are guided parallel to each other.

7. Apparatus according to any of claims 1 to 6 characterized in that the receiving support comprises a forward wall (36), which is provided with vertical slots and through which the suction arms (14) extend during their revolution.

8. Apparatus according to any of claims 1 to 7, characterized in that the receiving supports comprise a rear boundary wall (37), which is adapted to be lifted and to be pivotally moved.

9. Apparatus according to any of claims 1 to 8, characterized in that the suction arms (45) are so short that they move only over the rear portion of the receiving support, and that at least two upper belts of the double conveyor are provided with suction boxes (49) extending slightly beyond the forward end of the receiving support, and are provided with suction holes or groups of suction holes which have the same spacing as the workpieces and suck the workpieces only in their forward regions.

10. Apparatus according to any of claims 1 to 9, characterized in that the receiving support is laterally provided with vertical pins (10).

11. Apparatus according to any of claims 1 to 10, characterized in that a plurality of conveying lines for the articles to be stacked extend parallel to each other and the suctions arms associated with each of said conveying lines are secured to a transversely extending air-sucking pipe.

12. Apparatus according to claim 1, characterized in that supporting arms (106) provided with air-sucking openings (113) are provided and are pivotally movable inwardly to a position over the stack, and when the stack (103) has been formed the first article (112) of the following stack is deposited on said supporting arms.

13. Apparatus according to claim 12, characterized in that the supporting arms (106) are fingerlike and extend only over a marginal portion of said stack (103) to be carried off.

14. Apparatus according to claim 12 or 13, characterized in that retaining arms (101) are provided and are adapted to be lowered onto the stack (103) in vertical planes which are offset from the carrying arms (102) which serve for deposition, and said retaining arms are adapted to be moved together with the stack (103) out of the stack-forming station and are adapted to be returned to a waiting position above the range of movement of the carrying arms (102).

15. Apparatus according to any of claims 12 to 14, characterized in that the supporting arms (106) are pivotally movable in a vertical plane, which extends in the direction in which the stacks are carried away, the supporting arms are movable in said plane over that reversing pulley of the stack-conveying belt (111) which is the trailing reversing pulley with respect to the direction in which the stacks are carried away, and the supporting arms are thus movable to a retaining position, in which they are disposed above the stack (103).

16. Apparatus according to any of claims 12 to 15, characterized in that the retaining arms (101) are parallel to the direction in which the stacks are carried away and said retaining arms are provided in their rear portion with recesses (105) for receiving the fingerlike supporting arms (106).

17. Apparatus according to any of claims 12 to 16, characterized in that the supporting arms (106) are constituted by the upper legs of pivoted U-shaped members.

18. Apparatus according to any of claims 12 to 17, characterized in that fluid-operated piston-cylindre units (108) are provided for imparting a pivotal movement to the supporting arms (106).

**Revendications**

1. Dispositif pour empiler des objets plats tels que sections tubulaires, sachets ou objets semblables, de préférence en matériau froissant, flasque et/ou léger, comportant un dispositif de transport (6, 7) à double bande consistant en plusieurs bandes espacées et circulant en parallèle, un poste de déchargement (10, 38) qui est placé sous l'extrémité de déchargement du dispositif de transport, dans chaque espacement entre bandes adjacentes dudit dispositif de transport étant prévus au moins deux bras (14, 14', 14") qui sont disposés parallèlement l'un par rapport à l'autre et tournant à la vitesse de transport dans la partie terminale du dispositif de transport (6, 7) et passent par-dessus l'extrémité avant du dispositif de transport à double bande (6, 7) de manière à ce qu'ils atteignent leurs positions terminales au-dessus du poste de déchargement (10, 38) et lorsqu'ils ont été abaissés retournent à un plan parallèle au plan de transport jusqu'à ce qu'ils sont renversés et se déplacent de nouveau dans le plan de transport, caractérisé en ce que les bras consistent en bras de succion (14, 14', 14") qui sont pourvus de raccordements d'air de succion et dont les parties supérieures pourvues des orifices de succion se situent au niveau du plan de transport, que l'air de succion est commandé dans les bras de succion (14, 14', 14") de manière à ce que l'air de succion qui est introduit est interrompu au plus tard avant que les bras de succion se retirent de l'espacement entre les bandes, après ou pendant le mouvement d'abaissement des bras (14, 14', 14") par-dessus le poste de déchargement (10, 38) avant qu'ils n'effectuent leur mouvement de retrait, et que les bras de succion (14, 14', 14") sont pivotés de manière à ce qu'ils sont toujours parallèles au plan de transport pendant leur révolution.

2. Dispositif selon la revendication 1 caractérisé en ce que les bras de succion (14) sont fixés à des supports verticaux (13) qui sont pivotés par rapport à des courroies (11, 12) ou chaînes sans fin disposées sous le dispositif de transport à double bande (6, 7) et qui sont espacées en verticale et tournent parallèlement l'une par rapport à l'autre à la même vitesse.

3. Dispositif selon la revendication 2 caractérisé en ce que dans la partie terminale avant le dispositif de renversement avant d'une des courroies (11) ou d'une des chaînes est disposée une caisse de succion (22) comportant en haut une fente ouverte (24) qui est recouverte par la courroie (11) ou par une bande qui tourne dans le même sens, qui a côté du support (13) sont pourvues d'une ouverture ou d'un canal (41) débouchant dans un alésage du support, par lesquels l'admission d'air de succion dans les bras de succion (14) est effectuée.

4. Dispositif selon l'une des revendications 2 ou 3 caractérisé en ce que les paliers du support (13) sont vulcanisés ou injectés dans les courroies ou courroies crantées qui consiste en un matériau élastomère.

5. Dispositif selon l'une des revendications 2 à 4 caractérisé en ce que la caisse de succion est disposée autour des poulies de renvoi arrière de la courroie (11) ou de la chaîne et se termine directement derrière celles-ci.

6. Dispositif selon la revendication 2 caractérisé en ce que les supports sont logés sur des disques tournant au même régime, dont les axes sont décalés l'un par rapport à l'autre de manière à ce que les bras de succion sont guidés parallèlement l'un par rapport à l'autre.

7. Dispositif selon l'une des revendications 1 à 6 caractérisé en ce que le poste de déchargement est pourvu d'une paroi (36) avant comportant des fentes verticales à travers lesquelles les bras de succion (14) passent pendant leur révolution.

8. Dispositif selon l'une des revendications 1 à 7 caractérisé en ce que le poste de déchargement comporte une paroi de délimitation (37) arrière pouvant être relevée ou pivotée.

9. Dispositif selon l'une des revendications 1 à 8 caractérisé en ce que les bras de succion (45) sont tellement courts qu'ils ne passent que sur la partie arrière du poste de déchargement, et qu'au moins deux bandes supérieures du dispositif de transport à double bande sont pourvues d'une caisse de succion (49) s'étendant tout juste jusque devant l'extrémité avant du poste de déchargement et d'orifices ou groupes d'orifice de succion disposés à la distance des pièces à empiler et qui n'aspirent ces dernières que dans leur partie avant.

10. Dispositif selon l'une des revendications 1 à 9 caractérisé en ce que le poste de déchargement est pourvu latéralement de pointes (10) placées verticalement.

11. Dispositif selon l'une des revendications 1 à 10 caractérisé en ce que plusieurs lignes de transport pour empiler des objets sont disposées parallèlement l'une par rapport à l'autre dont les bras de succion sont chacun fixé à un tuyau d'amenée d'air de succion disposé transversalement.

12. Dispositif selon la revendication 1 caractérisé en ce qu'au-dessus de la pile (103) sont prévus des bras de support (106) pourvus d'orifices d'air de succion et pouvant être pivotés vers l'intérieur, bras sur lesquels est déposé le premier objet (112) de la pile successive après que la pile (103) a été formée.

13. Dispositif selon la revendication 12 caractérisé en ce que les bras de support (106) ont une forme de doigt et n'avancent sur la pile (103) à enlever que sur une partie marginale.

14. Dispositif selon l'une des revendications 12 ou 13 caractérisé en ce que des bras de retenue (101) sont prévus et sont adaptés pour être abaissés sur la pile (103) dans des plans verticaux qui sont décalés par rapport aux bras de support (102) qui servent au déchargement, et que lesdits bras de retenue sont adaptés pour être déplacés ensemble avec la pile (103) hors du poste de formation de la pile et pour être ramenés à leur position d'attente se trouvant au-dessus de l'espace de mouvement des bras de support (102).

15. Dispositif selon l'une des revendications 12 à 14 caractérisé en ce que les bras de support (106) peuvent être pivotés dans un plan vertical qui s'étend dans la direction dans laquelle les piles sont enlevées, lesdits bras de support (106) étant mobiles dans ledit plan au-dessus de la poulie de renvoi de la bande transporteuse des piles (111) qui est la poulie de renvoi arrière par rapport à la direction dans laquelle les piles sont enlevées les bras de support pouvant être amenés dans une position de retenue dans laquelle ils sont disposés au-dessus de la pile (103).

16. Dispositif selon l'une des revendications 12 à 15 caractérisé en ce que les bras de retenue (101) disposés parallèlement à la direction dans laquelle les piles sont enlevées sont pourvus en leur partie arrière d'échancrures (105) dans lesquelles s'emboîtent les bras de support (106) en forme de doigt.

17. Dispositif selon l'une des revendications 12 à 16 caractérisé en ce que les bras de support (106) sont constitués par les branches supérieures d'éléments pivotants en forme de U.

18. Dispositif selon l'une des revendications 12 à 17 caractérisé en ce que des unités de pistons/cylindres actionnés par un fluide (108) sont prévues pour pivoter les bras de support (106).

FIG.1

FIG.2

FIG.3

FIG.4

FIG.5

FIG.6

FIG.7

FIG.8